# EUROPÄISCHE PATENTANMELDUNG

(11) **EP 2 389 809 A2**
(43) Veröffentlichungstag der Anmeldung: **30.11.2011**
(21) Anmeldenummer: 11167116.0
(22) Anmeldetag: 23.05.2011
(51) Int. Cl.: A22B 3/00

(54) **Verfahren zur Überprüfung eines ordnungsgemäßen Tötens eines Schlachttiers**

(30) Priorität: 31.05.2010 DE 102010017160; 25.06.2010 DE 102010017597; 09.07.2010 DE 102010036330
(71) Anmelder: Banss Schlacht- und Fördertechnik GmbH, 35216 Biedenkopf (DE)
(72) Erfinder: Weide, Harald, 35216, Biedenkopf (DE); Schmidt, Frank, 35232, Dautphetal (DE)
(74) Vertreter: Stoffregen, Hans-Herbert

(57) **Zusammenfassung**

Die Erfindung bezieht sich auf ein Verfahren zur Überprüfung eines ordnungsgemäßen Tötens eines in einer Schlachtstraße transportierten Schlachttiers unter Berücksichtigung eines für das Töten relevanten Parameters, wobei bei Feststellen der Nichterfüllung des Parameters das Schlachttier einer ein sicheres Töten gewährleistenden Nachbearbeitung unterzogen wird. Hierzu kann die zeitabhängige Zunahme von aus dem Schlachttier austretendem Schwallblut gemessen und bei Unterschreitung von ein ordnungsgemäßes Töten repräsentierenden Soll-Werten ein Signal erzeugt werden.

## Beschreibung

Die Erfindung bezieht sich auf ein Verfahren zur Überprüfung eines ordnungsgemäßen Tötens eines insbesondere in einer Schlachtstraße transportierten Schlachttiers, insbesondere Schweins, insbesondere unter Berücksichtigung eines für das Töten relevanten Parameters, wobei bei Feststellen der Nichterfüllung des Parameters das Schlachttier einer ein sicheres Töten gewährleistenden Nachbearbeitung unterzogen wird.

Ein entsprechendes Verfahren ist der Veröffentlichung Fleischwirtschaft 5/2010, Seiten 8 - 10, zu entnehmen.

Überprüfungen in Schlachthöfen haben ergeben, dass in etwa 1 % von Schlachtschweinen nicht ordnungsgemäß gestochen werden, so dass diese am Ende der Entblutestrecke reagieren mit der Folge, dass das Schlachttier beim anschließenden Enthaaren in einer Brühanlage einem unzulässigen Risiko ausgesetzt wird. Daher wird ein Kontrollsystem vorgeschlagen, bei dem die Schweine vor und nach dem Entbluten gewogen werden, damit mittels geeigneter Software Schlachttiere, bei denen die Blutmenge einen bestimmten Grenzwert unterschreitet, aus dem Transportweg geschleust oder der Transport angehalten wird, um eine Nachbearbeitung zu ermöglichen.

Um den Grenzwert bestimmen zu können, ist es jedoch erforderlich, dass das Schlachttier vor oder nach dem Einstechen des Messers gewogen wird, da die Blutmenge vom Gewicht des Schlachttiers abhängig ist.

Die DE-U-93 10 215 bezieht sich auf eine Vorrichtung zur elektrischen Überwachung von elektrischen Betäubungsvorgängen an Schlachttieren. Dabei werden während des Betäubungsvorgangs Betäubungsspannung und Stromflüsse aufsummiert und registriert, um festzustellen, wann der erforderliche Betäubungsstrom den erforderlichen Mindestwert erreicht hat, der einer korrekten Betäubung entspricht.

Die DE-T-603 07 440 hat ein Verfahren und ein System zur Überwachung der Verarbeitung von Objekten zum Gegenstand, bei denen es sich z.B. um Fleischstücke handelt.

Gegenstand der DE-T-601 05 806 sind ein Verfahren und eine Vorrichtung zum Betäuben und Schlachten von Wassertieren wie Aalen. Diese werden einem von Strom durchflossenen Wasser ausgesetzt, wobei ein EEG oder ECG des Tieres durchgeführt wird.

Aus der US-A-2009/01 30 964 ist ein Verfahren bekannt, bei dem das Bearbeiten von geschlachteten Tieren verfolgt wird, wobei während der einzelnen Bearbeitungsschritte Ist- und Soll-Daten verglichen werden. Die geschlachteten Tiere werden mit einem RFID Transponder versehen, um die jeweiligen Bearbeitungsschritte konkret einem Schlachttier zuordnen zu können.

Der EP 1 799 041 B1 sind ein Verfahren und eine Vorrichtung zum Überprüfen des Ausblutens eine Schlachttieres zu entnehmen. Hierzu wird nach Entfernen des Stechmessers aus dem Schlachttier ein Bild aufgenommen, das einen Bereich unter dem Schlachttier abdeckt, in den das Blut des Schlachttiers gelangt. Dabei wird die Menge Blut in dem Bild als Fläche des Bildfeldes bestimmt, um von der Größe der Blutfläche Rückschlüsse auf ein ordnungsgemäßes Schlachten ziehen zu können.

Der vorliegenden Erfindung liegt die Aufgabe zu Grunde, ein Verfahren der eingangs genannten Art so weiterzubilden, dass insbesondere ohne Beeinträchtigung der weiteren

Bearbeitungsschritte in einer Schlachtstraße festgestellt werden kann, ob ein ordnungsgemäßes Töten eines Schlachttiers erfolgt ist, insbesondere auch dann, wenn nacheinander Schlachttiere unterschiedlicher Größen und Gewichte getötet werden, und ohne dass Kenntnis von dem Gewicht jedes einzelnen Schlachttiers erforderlich ist.

Zur Lösung der Aufgabe sieht die Erfindung im Wesentlichen vor,
dass nach Beginn des Entblutens des Schlachttiers zeitabhängige Verlaufsänderung von aus dem Schlachttier austretendem Blutvolumen oder austretender Blutmenge als Parameter gemessen wird und dass bei Unterschreitung von ein ordnungsgemäßes Töten repräsentierenden Soll-Werten ein Signal erzeugt wird, und/oder
dass das gestochene Tier innerhalb eines Zeitfensters Δt nach dem Stechen einer eine ein nicht ordnungsgemäßes Töten signalisierende Reaktion auslösenden Behandlung bei gleichzeitiger Überwachung des Schlachttiers ausgesetzt wird und dass bei Feststellen der Reaktion das Schlachttier der Nachbehandlung zugeführt wird, und/oder
dass bei Feststellen der Nichterfüllung des Parameters die Nachbearbeitung protokolliert und abgespeichert wird.

Zur Lösung der Aufgabe sieht die Erfindung u. a. vor, dass nach Beginn des Entblutens des Schlachttiers zeitabhängige Verlaufsänderung von aus dem Schlachttier austretendem Blutvolumen oder austretender Blutmenge als Parameter gemessen wird und dass bei Unterschreitung von ein ordnungsgemäßes Töten repräsentierenden Soll-Werten ein Signal erzeugt wird.

Erfindungsgemäß wird die Zunahme des Schwallblutes, d. h. dessen Menge bzw. Volumen unmittelbar nach dem Stich in Abhängigkeit von der Zeit nach dem Stich gemessen, um Rückschlüsse auf ein ordnungsgemäßes Stechen und somit Töten des Schlachttiers zu ermöglichen.

Dabei ist insbesondere vorgesehen, dass das aus dem Schlachttier fließende Blut in einem Behälter gesammelt wird, um sodann Blutmenge oder Blutvolumen z. B. mittels Wärmebildkamera, Füllstandssensor, optisch über ein in dem Behälter vorhandenes Sichtfenster oder durch Wiegen zu ermitteln. Andere geeignete Messverfahren kommen gleichfalls in Frage.

Vorzugsweise schlägt die Erfindung vor, dass nach Stechen des Schlachttiers die Veränderung des Blutvolumens bzw. der Blutmenge in aufeinander folgenden Zeitabständen Δt mit 0 sec < Δt ≤ 5 sec, insbesondere 0 sec < Δt ≤ 2 sec gemessen wird und aus den ermittelten Messwerten eine Ist-Kurve berechnet wird, die mit den eine Soll-Kurve bildenden Soll-Werten verglichen wird. Dabei wird die Blutmenge bzw. das Blutvolumen in der Soll-Kurve und in der Ist-Kurve in relativen Einheiten berücksichtigt.

Insbesondere werden 10 bis 20 aufeinander folgende Messungen durchgeführt, um die Veränderung des Volumens bzw. der Menge des aus dem Schlachttier strömenden Bluts in Abhängigkeit von der Dauer des Entblutens zu ermitteln.

Erfindungsgemäß soll die Menge des Schwallblutes direkt nach dem Stich gemessen werden, und zwar die Mengen- bzw. Volumenzunahme in Abhängigkeit von der Zeit nach dem Stich.

Zur Lösung der Aufgabe sieht die Erfindung auch vor, dass das gestochene Tier innerhalb eines Zeitfensters Δt nach dem Stechen einer eine mögliche Reaktion des Schlachttiers auslösenden Behandlung bzw. Beeinflussung bei gleichzeitiger Überwachung des Schlachttiers ausgesetzt wird und dass bei Feststellen einer ein nicht ordnungsgemäßes Schlachten signalisierenden Reaktion das Schlachttier der Nachbehandlung zugeführt wird.

Untersuchungen haben ergeben, dass Schlachttiere, die nicht ordnungsgemäß gestochen worden sind, nach etwa 3 bis 3 ½ Minuten nach dem Stechen erneut reagieren können. Um eine diesbezügliche Reaktion zu beschleunigen bzw. künstlich auszulösen, wird erfindungsgemäß das Schlachttier einer Behandlung unterzogen, die eine Reaktion wie Reflex dann auslösen kann, wenn das Schlachttier nicht ordentlich gestochen worden ist.

Die Reaktion, die dem Grunde nach eine Reflexreaktion ist, kann thermisch, elektrisch und/oder mechanisch ausgelöst werden. Insbesondere ist vorgesehen, dass das Schlachttier mit Wasser besprüht wird, wodurch klar erkennbare Reaktionen des Schlachttiers dann auftreten, wenn dieses nicht ordnungsgemäß getötet worden ist.

Aber auch das Beaufschlagen mit Strom oder das Einwirken von Reaktionen auslösenden mechanischen Hilfsmitteln wie Spitzen können benutzt werden, um eine Überprüfung des Schlachttiers vornehmen zu können. Dabei werden ausschließlich Reaktionen überprüft, die bei einem ordnungsgemäß getöteten Schlachttier nicht oder nicht in dem zu messenden Umfang auftreten können.

Das Zeitfenster, innerhalb dessen das Schlachttier zur Auslösung einer möglichen Reaktion behandelt wird, liegt bevorzugterweise zwischen 1 Minute und 6 Minuten, insbesondere zwischen 2 ½ Minuten und 4 Minuten nach dem Stechen des Schlachttiers, gleichwenn hierdurch eine Einschränkung der erfindungsgemäßen Lehre nicht erfolgt. Das Zeitfenster kann auch mit dem Stechen beginnen.

In Weiterbildung der Erfindung ist vorgesehen, dass das Schlachttier innerhalb des Zeitfensters mittels einer Kamera überwacht wird, um mögliche Reflexreaktionen zu erfassen und diese sodann zur Auslösung eines Signals zu nutzen, aufgrund dessen das Schlachttier z. B. aus dem normalen Transportweg herausgeschleust und sodann z. B. durch Bolzenschuss oder erneutes Entbluten sicher getötet wird. Dabei kann mittels eines Bildverarbeitungssystems eine Automatisierung derart durchgeführt werden, dass das Herausschleusen des Tieres ohne manuelle Eingriffe erfolgt.

Alternativ besteht die Möglichkeit, dass das Schlachttier innerhalb des Zeitfensters, insbesondere nach Beendigung des Austritts des Schwallbluts, fortwährend oder zumindest mehrfach gewogen wird, wobei außerhalb von vorgegebenen Toleranzen liegender Gewichtsschwankungen bzw. -veränderungen diese als Signal für eine sich durch ein nicht ordnungsgemäßes Töten erfolgende Reaktion des Schlachttiers gewertet werden.

Dabei besteht die Möglichkeit, durch eine Vielzahl von Messungen innerhalb des Zeitfensters zu überprüfen, inwieweit aufgrund der Behandlung eine Bewegung des Schlachttieres erfolgt, da hierdurch bedingt Gewichtsschwankungen auftreten, die au-βerhalb von gegebenen Toleranzen liegen. Bei der Bestimmung der Toleranzen wird auch üblicher Blutverlust, der durch das Stechen bewirkt wirkt, berücksichtigt.

Erfindungsgemäß wird eine Reflexreaktion des gestochenen Tieres als Parameter benutzt, um ein ordnungsgemäßes Töten festzustellen bzw. überprüfen zu können. Dieser Parameter der Reflexreaktion ist dabei grundsätzlich vom tatsächlichen Gewicht des Schlachttieres unabhängig.

Die Erfindung zeichnet sich auch dadurch aus, dass bei Feststellen der Nichterfüllung des Parameters die Nachbearbeitung protokolliert und abgespeichert wird.

Aufgrund der erfindungsgemäßen Lehre ist sichergestellt, dass das Nachbearbeiten erfasst und dokumentiert wird, um sodann nachweisen zu können, dass den Tierschutzbedingungen entsprochen worden ist. Dabei ist insbesondere vorgesehen, dass die Nachbearbeitung optisch erfasst und abgespeichert wird. Dies kann mittels einer Videoaufzeichnung erfolgen. Alternativ und ergänzend kann die Nachbearbeitung durch ein individuell angefertigtes Protokoll erfasst und abgespeichert werden. Dies kann von einer Bedienperson erfolgen, die am Ende der Entblutestrecke eine Überwachung vornimmt.

Des Weiteren ist vorgesehen, dass die die Nachbearbeitung betreffenden abgespeicherten Daten in einem Datenspeicher abgelegt werden, der sich in einer Black Box befindet. Somit ist sichergestellt, dass die Dokumentation der Nachbearbeitung von nicht ordnungsgemäß getöteten Schlachttieren vor Fremdzugriffen gesichert ist, um eine Manipulation auszuschließen. Somit kann das Nachbearbeiten allein von zertifizierten Personen oder Einrichtungen wie z.B. Veterinären bzw. Personen einer Veterinärbehörde überprüft werden.

Insbesondere ist vorgesehen, dass als Parameter Menge des während einer Entblutestrecke ermittelten aus dem Schlachttier geflossenen Bluts, Veränderungen des pH-Werts des Bluts während des Entblutens, Veränderungen des Hormonausstoßes während oder nach dem Entbluten, Herztätigkeit und/oder Hirntätigkeit ausgewählt wird.

Dabei wird insbesondere die Menge des Bluts durch dessen Auffangen nach dem Einstechen eines Messers in das Schlachttier und/oder aus der Gewichtsdifferenz des Schlachttiers zwischen Anfang und Ende der Entblutestrecke ermittelt.

Die Herztätigkeit und/oder Hirntätigkeit wird durch EKG- bzw. EEG-Messung nach vorgegebener Zeit nach Beginn des Blutentzugs zur Ermittlung des Parameters ermittelt.

Bei Nichterfüllung des ein sicheres Töten signalisierenden Parameters kann das Schlachttier aus dem Förderweg der Schlachtstraße ausgeschleust und der Nachbearbeitung zugeführt werden. Alternativ kann der Transport des Schlachttiers in der Schlachtstraße angehalten werden und die Nachbearbeitung erfolgen.

Bevorzugterweise ist vorgesehen, dass das Schlachttier vor dem Betäuben mit zumindest einem Transponder wie RFID-Transponder gekennzeichnet wird, dessen Daten mit den protokollierten Daten verknüpft werden. Somit kann ein lückenloses Verfolgen des Schlachttiers während des Transports und der Bearbeitung in der Schlachtstraße erfolgen, um überprüfen zu können, ob die während der Bearbeitungsschritte in der Schlachtstraße durchgeführten Maßnahmen u.a. Tierschutzbestimmungen entsprechen.

Ein eigenständiger Lösungsvorschlag sieht vor, dass eine Anzahl von Schlachttieren hintereinander transportiert wird, dass jedes Schlachttier mit einem gesonderten, jeweils einer Halterung entnommenen Messer gestochen wird, dass ein Vergleich zwischen der Anzahl der Schlachttiere und der Anzahl der benutzten Messer erfolgt und dass bei einer Abweichung ein Signal erzeugt wird. Die Anzahl der Schlachttiere und die der Messer werden dabei in einem gemeinsamen Zeitfenster ermittelt.

Erfindungsgemäß wird überprüft, ob die Anzahl der in einer Entblutestrecke vorhandenen oder diese durchlaufenden Schlachttiere mit der Anzahl der Messer übereinstimmt, mit der die Schlachttiere gestochen werden.

Sollte z. B. der Fall eintreten, dass ein kleineres Schlachttier auf dem Transportweg durch größere Schlachttiere aus der Transportlinie nach hinten herausgedrückt wird, so dass dieses von einem Schlachter nicht wahrgenommen wird, so würde sich herausstellen, dass die gemessene Anzahl der Schlachttiere nicht mit der Anzahl der benutzten Messer übereinstimmt. Durch ein Signal wird sodann der Schlachter auf den entsprechenden Fehler hingewiesen, so dass ein Nacharbeiten erfolgen kann.

Insbesondere ist vorgesehen, dass die Messer von Halterungen aufgenommen werden, die von einem synchron mit der Förderung der Schlachttiere umlaufenden Förderer wie Karussell-Förderer ausgehen.

Ferner wird über erste Sensoren die Anzahl der durch eine Entblutestrecke geförderten Schlachttiere und über zweite Sensoren die Anzahl der in der Entblutestrecke zum Einsatz gelangenden Messer ermittelt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer zeitabhängig gemessenen Volumenzunahme aufgefangenen Bluts eines entblutenden Schlachttiers,
- Fig. 2: eine Prinzipdarstellung eines Ausschnitts einer Schlachtstraße im Bereich einer Entblutestrecke,
- Fig. 3: die Anordnung gemäß Fig. 2, wobei ein Schlachttier nicht ordnungsgemäß getötet ist, und
- Fig. 4: ein Verfahrensablauf zur Überprüfung eines ordnungsgemäßen Tötens eines Schlachttiers.

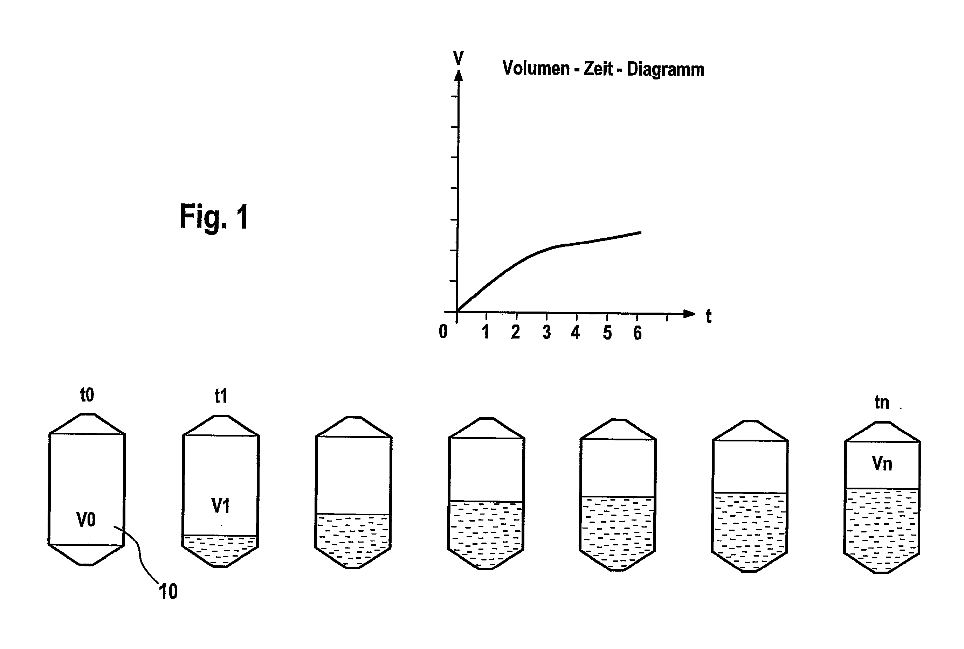

Der Fig. 1 ist eine Prinzipdarstellung eines Messverfahrens zu entnehmen, das es ermöglicht festzustellen, ob ein Schlachttier ordnungsgemäß getötet worden ist. Hierbei macht man sich die Kenntnis zunutze, dass nach dem Einstechen eines Messers wie Hohlmessers in das zu tötende Tier beim Entbluten die Blutmengen über die Zeit betrachtet nicht linear ausströmt. Dies wird prinzipiell anhand der Fig. 1 verdeutlicht.

So wird nach einem Startpunkt, der dem Einstechen eines Messers in das Schlachttier und somit dem Beginn des Entblutens entsprechen kann, das aus dem Schlachttier flie-βende Blut in einem Behältnis 10 aufgefangen, um die Mengen- bzw. Volumenzunahme in Abhängigkeit von der Zeit zu messen. Es sollte die Menge bzw. das Volumen des Schwallblutes erfasst werden, das unmittelbar nach dem Stich austritt. Die zeitliche Verlaufsänderung ermöglicht Aussagen, ob das Schlachttier ordnungsgemäß gestochen worden ist und somit getötet wird.

Wie sich aus der Darstellung der Fig. 1 ergibt, ist eine nichtlineare Zunahme der Menge des ausfließenden Blutes und damit des Blutvolumens festzustellen, wobei die zeitabhängige Verlaufsänderung, also die relative Zunahme des ausfließenden Bluts unabhängig vom Gewicht des Schlachttiers ist. So ist der relative Verlauf des austretenden Bluts pro Zeiteinheit für Schlachttiere gleicher Art innerhalb zu bestimmender Toleranzen prinzipiell gleich. Somit kann man aus der zeitabhängigen Verlaufsänderung des Blutaustritts und damit des gesammelten Bluts Rückschlüsse ziehen, ob ein ordnungsgemä-βes Einstechen und Entbluten des Schlachttiers erfolgt ist, um dieses nach Ende einer Blutstrecke als ordnungsgemäß getötet klassifizieren zu können oder nicht.

Ein entsprechendes Blutvolumen-Zeit-Diagramm ist der Fig. 1 zu entnehmen.

Um die Blutmenge und damit das Blutvolumen zu bestimmen, kommen verschiedene Verfahren in Frage. So kann das Behältnis 10 einen Füllstandsmesser aufweisen bzw. die Höhe des in dem Behältnis 10 aufgefangenen Blutes kann mittels einer Wärmebildkamera bestimmt werden. Auch besteht die Möglichkeit, das Behältnis 10 mit einem Sichtfenster zu versehen, um sodann optisch z. B. mittels einer Kamera das Ansteigen der Blutmenge in dem Behältnis überwachen und damit messen zu können. Aber auch eine Gewichtsveränderung des Behältnisses kann zur Bestimmung des Blutvolumens bzw. der Blutmenge benutzt werden, um deren zeitabhängige Verlaufsänderung als Parameter für ein ordnungsgemäßes oder nicht ordnungsgemäßes Töten auszuwerten.

Wird eine Nichterfüllung des Parameters festgestellt, so wird dies signalisiert, um das entsprechende Schlachttier einer Nachbearbeitung zu unterziehen.

Folglich bezieht sich die Erfindung auf ein Verfahren zur Überprüfung eines ordnungsgemäßen Tötens eines in einer Schlachtstraße transportierten Schlachttiers unter Berücksichtigung eines für das Töten relevanten Parameters, wobei bei Feststellen der Nichterfüllung des Parameters das Schlachttier einer ein sicheres Töten gewährleistenden Nachbearbeitung unterzogen wird. Hierzu wird die zeitabhängige Zunahme von aus dem Schlachttier austretendem Schwallblut gemessen und bei Unterschreitung von ein ordnungsgemäßes Töten repräsentierenden Soll-Werten ein Signal erzeugt.

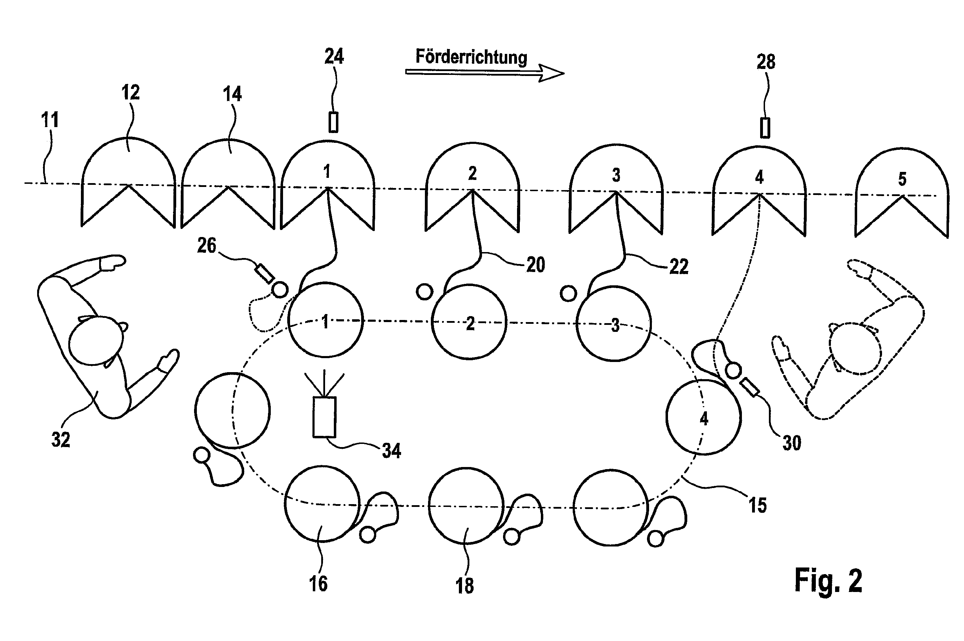

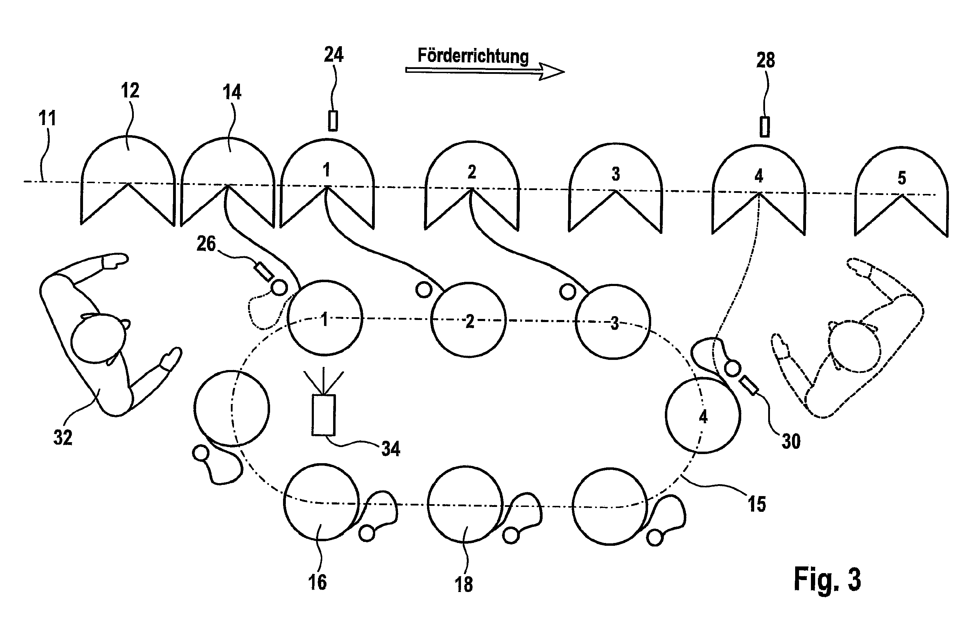

Eine alternative Methode, um das ordnungsgemäße Töten des Schlachttiers zu überwachen, ist den Fig. 2 und 3 zu entnehmen. Den Figuren, in denen für gleiche Elemente gleiche Bezugszeichen Verwendung finden, ist ein Ausschnitt einer Schlachtstraße zu entnehmen, und zwar im Bereich einer Entblutestrecke.

Dem Förderer und somit dem Förderweg 11 der Schlachttiere 12, 14 ist ein Karussell-Förderer 15 zugeordnet, der Aufnahmen wie Halterungen 16, 18 für Hohlmesser aufweist, mit denen die Schlachttiere 12, 14 gestochen werden sollen.

Die Hohlmesser sind über z. B. Drähte 20, 22 mit den Halterungen 16, 18 fest verbunden.

Aufeinander folgende Schlachttiere 12, 14 werden jeweils mit einem gesonderten Messer geschlachtet, d. h., dass ein Messer nicht für mehrere Schlachttiere 12, 14 benutzt wird, solange sich Schlachttiere 12, 14 in einem zu überwachenden Zeitfenster befinden, das z. B. durch die übliche Transportdauer durch die Entblutestrecke vorgegeben ist.

Im Ausführungsbeispiel sind insgesamt acht Halterungen 16, 18 für Messer vorgesehen, die synchron mit der Fördergeschwindigkeit der Schlachttiere 12, 14 bewegt werden.

Wie sich aus der Fig. 1 ergibt, werden durch einen Sensor 24 die in die Entblutestrecke eintretenden Schlachttiere 12, 14 gezählt. Gleichzeitig erfolgt über einen Sensor 26 eine Überwachung der aus den Halterungen 16, 18 entnommenen Messer mit denen, die durch die Entblutestrecke geförderten Schlachttiere 12, 14 gestochen werden. Im Ausführungsbeispiel der Fig. 2 erfolgt demzufolge eine Zuordnung des der Halterung 1 entnommenen Messers zu dem Schlachttier 1, ein der Halterung 2 entnommenes Messer zu dem Schlachttier 2 usw. Am Ende der Entblutestrecke wird über einen weiteren Sensor 28 die Anzahl der in dem Zeitfenster durch die Entblutestrecke geförderten Schlachttiere 12, 14 unter Berücksichtigung der von dem Sensor 24 übermittelten Signale gezählt. Entsprechend wird die Anzahl der nach dem Entbluten aus den Schlachttieren 12, 14 herausgezogenen und in die Halterungen 16, 18 zurückgesteckten Messer mittels eines Sensors 30 bestimmt, wobei gleichfalls die Startsignale des Sensors 26 berücksichtigt werden.

Sollte die Anzahl der gezählten Schlachttiere 12, 14 von der Anzahl der entnommenen und zurückgesteckten Messer 20, 22 abweichen, wird ein Signal erzeugt, das der das Stechen der Schlachttiere 12, 14 durchführenden Bedienperson 32 signalisiert, dass ein Schlachttier 12, 14 nicht gestochen worden ist und somit nicht getötet, wie dies anhand eines Vergleichs der der Fig. 2 und 3 verdeutlicht wird.

Wie sich aus der Fig. 2 ergibt, werden in einem überwachten Zeitfenster vier Schlachttiere 1, 2, 3, 4 gezählt. Werden sämtliche Schlachttiere 1, 2, 3, 4 gestochen, so werden in demselben Zeitfenster vier in die Halterungen 16, 18 zurückgeführte Messer gezählt.

Die Fig. 3 verdeutlicht, dass fehlerhaft das Schlachttier 3 nicht gestochen worden ist. Infolgedessen werden in dem überwachten Zeitfenster vier Schlachttiere 1, 2, 3, 4, jedoch nur drei zurückgesteckte Hohlmesser gezählt.

Ein Übersehen eines Schlachttiers kann dann auftreten, wenn z. B. das Schlachttier 3 größenmäßig kleiner als die benachbarten Schlachttiere 2, 4 sind, so dass das Schlachttier 3 aus dem Förderweg nach hinten zurückgedrängt wird und somit von der Bedienperson 22 nicht wahrgenommen worden ist.

Da jedes Messer mit einer der Halterungen 16, 18 z. B. durch den Draht 20, 22 fest verbunden ist, ist eine eindeutige Zuordnung gegeben.

Somit ist beim Feststellen, dass die Anzahl der zurückgesteckten Messer geringer ist als die Anzahl der in einem gleichen Zeitfenster gezählten Schlachttiere 12, 14, die Nichterfüllung eines ordnungsgemäßen Schlachtens signalisiert. Das Zählen der einander zugeordneten Messer und Schlachttiere stellt somit einen Parameter dar, der Aufschluss bietet, ob ein ordnungsgemäßes Schlachten erfolgt ist.

Ergänzend ist zu den Fig. 2 und 3 anzumerken, dass in diesen ein optischer Sensor wie Kamera 34 eingezeichnet ist, mit der die Blutmenge bzw. das Blutvolumen ermittelt werden kann, die bzw. das aus dem Schlachttier 12, 14 nach Einstechen des Messers ausströmt, um den aus der zeitabhängigen Verlaufsänderung des ausströmenden Bluts sich ergebenden Parameter entsprechend der Erläuterungen zu der Fig. 1 zu messen.

In Weiterbildung der Erfindung ist vorgesehen, dass bei Feststellen der Nichterfüllung des Parameters die Nachbearbeitung protokolliert und abgespeichert wird.

Aufgrund der erfindungsgemäßen Lehre ist sichergestellt, dass das Nachbearbeiten erfasst und dokumentiert wird, um sodann nachweisen zu können, dass den Tierschutzbedingungen entsprochen worden ist. Dabei ist insbesondere vorgesehen, dass die Nachbearbeitung optisch erfasst und abgespeichert wird. Dies kann mittels einer Videoaufzeichnung erfolgen. Alternativ und ergänzend kann die Nachbearbeitung durch ein individuell angefertigtes Protokoll erfasst und abgespeichert werden. Dies kann von einer Bedienperson erfolgen, die am Ende der Entblutestrecke eine Überwachung vornimmt.

Des Weiteren ist vorgesehen, dass die die Nachbearbeitung betreffenden abgespeicherten Daten in einem Datenspeicher abgelegt werden, der sich in einer Black Box befindet. Somit ist sichergestellt, dass die Dokumentation der Nachbearbeitung von nicht ordnungsgemäß getöteten Schlachttieren vor Fremdzugriffen gesichert ist, um eine Manipulation auszuschließen. Somit kann das Nachbearbeiten allein von zertifizierten Personen oder Einrichtungen wie z. B. Veterinären bzw. Personen einer Veterinärbehörde überprüft werden.

In einem ersten Verfahrensschritt 110 erfolgt eine Kennzeichnung des Schlachttiers, das nachstehend vereinfacht als Schwein bezeichnet wird. Das Kennzeichnen wird durch zumindest Ablegen eines Transponders wie RFID-Transponders in einem Bereich des Schweins durchgeführt, der während der gesamten Bearbeitung des Schweins in der Schlachtstraße unverletzt bleibt. Insbesondere wird jeweils ein Transponder in einem Schenkel des Schweins abgelegt. Sodann wird das Schwein in einem Verfahrensschritt 112 betäubt. Dies erfolgt bevorzugterweise in einer CO₂-Betäubungsanlage. Nach Verlassen der Betäubungsanlage wird das Schwein an einen Förderer übergeben. Sodann wird ein Messer wie Hohlmesser in den Hals-/Brustbereich des betäubten Schweins eingestochen (Verfahrensschritt 114).

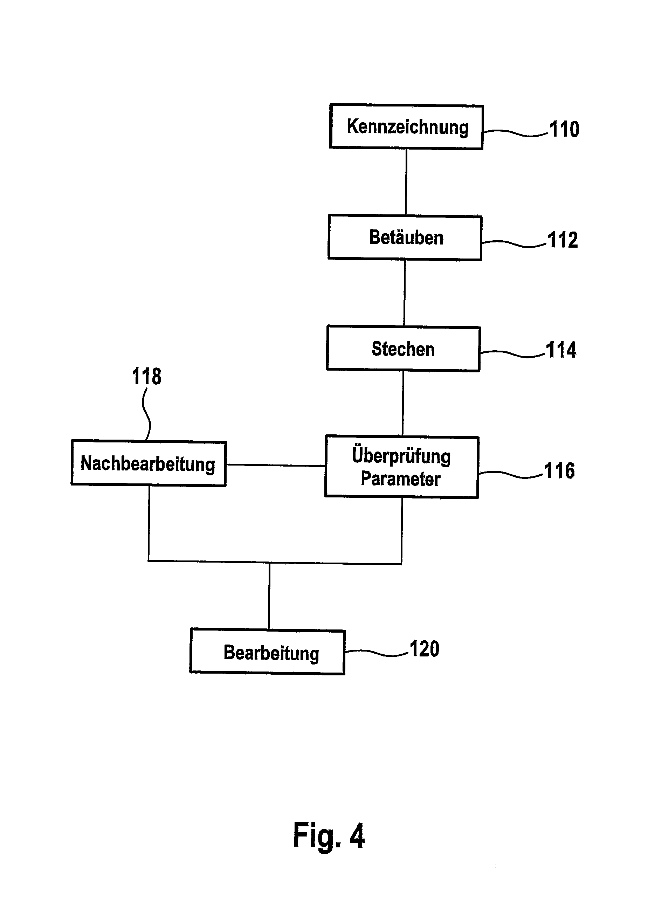

Um ein ordnungsgemäßes Töten überwachen zu können, wird sodann entsprechend der erfindungsgemäßen Lehre ein Parameter ausgewählt, der entsprechende Rückschlüsse ermöglicht. Dies kann die zeitliche Änderung der Blutmenge bzw. des Blutvolumens sein, die bzw. das nach dem Stechen des Schlachttiers aus diesem strömt und gemessen wird, oder durch den Vergleich der Anzahl der in einem Zeitfenster durch die Entblutestrecke geförderten Schlachttiere zu der Anzahl der Messer erfolgen, mittels der die Schlachttiere gestochen werden. Ein entsprechender Verfahrensschritt ist in der Fig. 4 mit 116 gekennzeichnet.

Die ermittelten Werte werden über angepasste Schnittstellen an einen Auswerte-PC übermittelt, in dem ein Abgleich bzw. eine Auswertung der Daten erfolgt. Ein positiver Befund wird ausgegeben, wenn die ermittelten Werte den Vorgaben entsprechen. In diesem Fall läuft die Anlage, d. h. der Transport des Schweins normal weiter. Die Werte werden unter Zuordnung des gekennzeichneten Schweins mit Datum und Uhrzeit in einer Protokolldatei abgespeichert. Ergibt jedoch die Messung, dass der ein sicheres Töten signalisierende Parameter nicht erfüllt ist, wird ein negativer Befund ausgegeben. In diesem Fall wird ein Signal zur Einleitung von Maßnahmen ausgegeben, um das Tier einer Nachbearbeitung (Verfahrensschritt 118) zu unterziehen. Die Nachbearbeitung kann derart erfolgen, dass das Schlachttier aus dem Transportweg herausgeschleust und sodann z. B. durch Bolzenschuss oder erneutes Entbluten sicher getötet wird.

Anschließend erfolgt eine weitere Bearbeitung (Verfahrensschritt 120) wie Zuführen des Schlachttiers zu einer Brühanlage. Gleiches erfolgt, wenn die Messwerte (Verfahrensschritt 116) einen positiven Befund ergeben, d. h., dass der ermittelte Parameter signalisiert, dass das Schwein ordnungsgemäß getötet ist.

Erfindungsgemäß wird das Nachbearbeiten protokolliert und die entsprechenden Daten abgespeichert. Hierzu ist insbesondere vorgesehen, dass das Nachbearbeiten mittels Videoaufzeichnung erfasst und die entsprechenden Daten einem geschlossenen und zertifizierten System, das nicht manipulierbar ist, zugeführt wird. Mit anderen Worten werden die Daten in einer sogenannten Black Box abgespeichert, die ausschließlich zertifizierten Personen bzw. einer zertifizierten Behörde zugänglich ist.

Alternativ oder ergänzend zu einer optischen Aufzeichnung kann auch ein Protokoll angefertigt werden, in dem die entsprechenden das Nachbearbeiten betreffenden Daten über eine Tastatur einem Rechner zugeführt werden. Dies kann durch einen Schlachter oder Veterinär erfolgen, der am Ende der Entblutestrecke den entsprechenden Parameter erfasst und gegebenenfalls das Nachbearbeiten eingeleitet hat.

Die sichere Dokumentation der Nachbearbeitung ermöglicht somit einen Nachvollzug, ob tatsächlich die Schlachttiere ordnungsgemäß getötet worden sind und damit den Tierschutzbedingungen entsprochen wurde.

Anstelle oder ergänzend der Blutmengenbestimmung als Parameter kann auch mittels EKG-Messung die Herztätigkeit bzw. mittels EEG-Messung die Hirntätigkeit nach einer festzulegenden Zeit nach Beginn des Blutentzugs bestimmt werden. Auch der Hormonausstoß nach einem vorgegebenen Zeitpunkt nach dem Betäuben bzw. Beginn des Entblutens kann als Parameter gewählt werden, der Rückschlüsse über ein ordnungsgemä-βes Töten bietet. Chemische Veränderungen des Bluts wie Veränderung des pH-Werts bieten gleichfalls eine entsprechende Möglichkeit.

Aufgrund der erfindungsgemäßen Lehre wird die Möglichkeit geboten, ein ordnungsgemäßes Töten eines Schlachttiers zu überprüfen, wobei die Nachbearbeitung derart erfasst ist, dass die entsprechenden Daten manipuliersicher abgelegt werden.

## Patentansprüche

1. Verfahren zur Überprüfung eines ordnungsgemäßen Tötens eines insbesondere in einer Schlachtstraße transportierten Schlachttiers, insbesondere Schweins, insbesondere unter Berücksichtigung eines für das Töten relevanten Parameters, wobei bei Feststellen der Nichterfüllung des Parameters das Schlachttier einer ein sicheres Töten gewährleistenden Nachbearbeitung unterzogen wird,
**dadurch gekennzeichnet,**
**dass** nach Beginn des Entblutens des Schlachttiers zeitabhängige Verlaufsänderung von aus dem Schlachttier austretendem Blutvolumen oder austretender Blutmenge als Parameter gemessen wird und dass bei Unterschreitung von ein ordnungsgemäßes Töten repräsentierenden Soll-Werten ein Signal erzeugt wird, und/oder
**dass** das gestochene Tier innerhalb eines Zeitfensters Δt nach dem Stechen einer eine ein nicht ordnungsgemäßes Töten signalisierende Reaktion auslösenden Behandlung bei gleichzeitiger Überwachung des Schlachttiers ausgesetzt wird und dass bei Feststellen der Reaktion das Schlachttier der Nachbehandlung zugeführt wird, und/oder
**dass** bei Feststellen der Nichterfüllung des Parameters die Nachbearbeitung protokolliert und abgespeichert wird.

2. Verfahren nach Anspruch 1,
**dadurch gekennzeichnet,**
**dass** das Schlachttier zum Auslösen einer möglichen Reaktion thermisch, elektrisch und/oder mechanisch behandelt und/oder mit Wasser besprüht wird.

3. Verfahren nach Anspruch 1 oder 2,
**dadurch gekennzeichnet,**
**dass** die Nachbearbeitung optisch erfasst und abgespeichert wird, insbesondere die Nachbearbeitung durch ein individuell angefertigtes Protokoll erfasst und abgespeichert wird, wobei die die Nachbearbeitung betreffenden abgespeicherten Daten in einem Datenspeicher abgelegt werden, der sich vorzugsweise in einer Black Box befindet.

4. Verfahren nach zumindest einem der vorhergehenden Ansprüche,
**dadurch gekennzeichnet,**
**dass** das Blutvolumen des in einem Behälter gesammelten Bluts mittels Wärmebildkamera, Füllstandssensor oder optisch z. B. über ein in dem Behälter vorhandenes Sichtfenster ermittelt wird, wobei insbesondere nach dem Stechen des Schlachttiers die Zunahme des Blutvolumens bzw. der Blutmenge in aufeinander folgenden Zeitabständen Δt mit 0 sec < Δt ≤ 5 sec, insbesondere 0 sec < Δt ≤ 2 sec, gemessen wird und aus den so ermittelten Messwerten eine Ist-Kurve berechnet wird, die mit der Soll-Kurve verglichen wird, wobei vorzugsweise die zeitliche Veränderung der Blutmenge bzw. des Blutvolumens in der Soll-Kurve und der Ist-Kurve in relativen Einheiten berücksichtigt wird.

5. Verfahren nach Anspruch 1,
**dadurch gekennzeichnet,**
**dass** als Zeitfenster eine Zeitspanne zwischen 1 Minute und 6 Minuten, insbesondere zwischen 2 ½ Minuten und 4 Minuten nach dem Stechen ausgewählt wird, wobei insbesondere das Schlachttier innerhalb des Zeitfensters mittels einer Kamera überwacht wird.

6. Verfahren nach Anspruch 1,
**dadurch gekennzeichnet,**
**dass** das Schlachttier innerhalb des Zeitfensters, insbesondere nach Beendigung des Austritts des Schwallbluts, fortwährend oder zumindest mehrfach gewogen wird, wobei außerhalb von vorgegebenen Toleranzen liegender Gewichtsschwankungen bzw. -veränderungen diese als Signal für eine sich durch ein nicht ordnungsgemäßes Töten erfolgende Reaktion des Schlachttiers gewertet werden.

7. Verfahren nach Anspruch 1,
**dadurch gekennzeichnet,**
**dass** als Parameter Menge des während einer Entblutestrecke ermittelten aus dem Schlachttier geflossenen Bluts, Veränderungen des Bluts wie pH-Wert, Herztätigkeit, Hirntätigkeit und/oder Veränderung von Hormonausstoß des Schlachttiers ausgewählt wird.

8. Verfahren zur Überprüfung eines ordnungsgemäßen Tötens eines in einer Schlachtstraße transportierten Schlachttiers, insbesondere Schweins, unter Berücksichtigung eines für das Töten relevanten Parameters, wobei bei Feststellen der Nichterfüllung des Parameters das Schlachttier einer ein sicheres Töten gewährleistenden Nachbearbeitung unterzogen wird,
**dadurch gekennzeichnet,**
**dass** eine Anzahl von Schlachttieren hintereinander durch eine Entblutestrecke gefördert werden, dass jedes Schlachttier mit einem gesonderten, jeweils aus einer Halterung entnommenen Messer wie Hohlmesser gestochen wird, dass zur Bestimmung des Parameters ein Vergleich zwischen der Anzahl der Schlachttiere und der Anzahl der benutzten Messer erfolgt und dass bei einer Abweichung ein Signal erzeugt wird.

9. Verfahren nach Anspruch 8,
**dadurch gekennzeichnet,**
**dass** die Messer von Halterungen aufgenommen werden, die von einem synchron mit dem Förderer der Schlachttiere umlaufenden Förderer wie Karussell-Förderer ausgehen, wobei insbesondere jedes Messer über z. B. einen Draht mit der Halterung verbunden ist.

10. Verfahren nach zumindest einem der vorhergehenden Ansprüche,
**dadurch gekennzeichnet,**
**dass** bei Nichterfüllung des Parameters bzw. nach Feststellen einer ein nicht ordnungsgemäßes Töten signalisierenden Reaktion das Schlachttier automatisch aus einem Transportweg geschleust oder ein weiterer Transport des Schlachttiers unterbunden wird, um sodann das Schlachttier nachzubearbeiten.

11. Verfahren nach zumindest Anspruch 1,
**dadurch gekennzeichnet,**
**dass** das Schlachttier vor dem Entbluten, insbesondere vor dem Betäuben mit zumindest einem Transponder wie RFID-Transponder gekennzeichnet wird, dessen Daten mit den protokollierten Daten verknüpft werden.
